# EUROPEAN PATENT APPLICATION

(11) **EP 4 290 441 A1**
(43) Date of publication of application: **13.12.2023**
(21) Application number: 23177857.2
(22) Date of filing: 07.06.2023
(51) Int. Cl.: G06Q 20/38, G06F 21/51, G06F 21/53

(54) **PORTABLE ELECTRONIC DEVICE FOR CRYPTOCURRENCY TRANSACTIONS**

(30) Priority: 08.06.2022 KR 20220069425
(71) Applicant: Anam145, Seoul 02841 (KR)
(72) Inventor: LEE, Junghee, 02721 Seoul (KR); SIM, Junsik, 08061 Seoul (KR)
(74) Representative: BCKIP Part mbB

(57) **Abstract**

The disclosure relates to a portable electronic device for cryptocurrency transactions, which provides user convenience and security. According to an embodiment, a portable electronic device for cryptocurrency transactions may include a storage storing an electronic wallet in which at least one of a private key for cryptocurrency transactions or a non-fungible token (NFT) is stored, an operating system (OS), a web browser, and a cryptocurrency transaction application, a network interface for communication with the outside, a display, and a controller. The controller may be configured to operate as programed in the OS, block introduction of an execution code from the network interface, and block installation of a new application or plug-in other than the cryptocurrency transaction application stored in the storage.

## Description

### CROSS-REFERENCE TO RELATED APPLICATION(S)

This application claims priority on the Korean patent application No. 10-2022-0069425 filed with the Korean Intellectual Property Office on June 08, 2022.

### TECHNICAL FIELD

The disclosure relates to a portable electronic device for cryptocurrency transactions, and more particularly, to a portable electronic device for cryptocurrency transactions, which provides ease of use and security.

### BACKGROUND

Cryptocurrency (or fungible tokens) and non-fungible token (NFT) have been increasingly attracted interest worldwide. Accordingly, interest and research on financial transactions based on cryptocurrency are also increasing.

Cryptocurrency-based financial transactions may be divided into centralized finance (CeFi) and decentrazlied finance (DeFi). CeFi means centralized finance, and DeFi means decentralized finance.

CeFi and DeFi differ in terms of transaction methods. CeFi is a general form of finance conducted by banks and securities companies, in which financial institutions act as intermediaries and take commissions, whereas DeFi is a blockchain-based form of finance that utilizes smart contracts on the blockchain without relying on a central financial intermediary such as intermediaries, exchanges or banks.

In general, beginners have many difficulties in using a crypto wallet such as Metamask, and thus there is a need for a system that allows beginners to use cryptocurrency transactions as easily as a tablet.

In addition, since the cryptocurrency transaction service is made based on a web interface, for example, a web browser, it may be vulnerable to hacking from the outside in case of weak security.

Therefore, there is a need for a cryptocurrency trading system that is easy to use and provides strong security.

Despite the increasing interest in digital assets using NFT, NFT assets may be checked through a web browser in a PC environment, but not in a mobile environment.

Accordingly, just as financial assets are easily checked through a mobile terminal, a technology that enables easy check of NFT assets not only on a PC but also on a portable device is required.

The above information is presented as background information only to assist with an understanding of the disclosure. No determination has been made, and no assertion is made, as to whether any of the above might be applicable as prior art with regard to the present disclosure.

### SUMMARY

An aspect of the disclosure is to address at least the above-mentioned problems and/or disadvantages and to provide at least the advantages described below. Accordingly, an aspect of the present disclosure is to provide a portable electronic device for cryptocurrency transactions, which enables easy non-fungible token (NFT) and has portability.

Another aspect of the disclosure is to provide a portable electronic device for cryptocurrency transactions, which enables easy use of cryptocurrency transaction service.

Another aspect of the disclosure is to provide a portable electronic device for cryptocurrency transactions, which provides strong security so that a user may use cryptocurrency transactions with confidence.

Objects of the disclosure are not limited to what has been described above, and those skilled in the art will clearly understand other objects intended by the disclosure from the following description.

According to an embodiment of the disclosure, a portable electronic device for cryptocurrency transactions may include a storage storing an electronic wallet in which at least one of a private key for cryptocurrency transactions or a non-fungible token (NFT) is stored, an operating system (OS), a web browser, and a cryptocurrency transaction application, a network interface for communication with the outside, a display, and a controller.

According to an embodiment, the controller may be configured to operate as programed in the OS, block introduction of an execution code from the network interface, and block installation of a new application or plug-in other than the cryptocurrency transaction application stored in the storage.

According to an embodiment, when the electronic wallet includes the NFT, the controller may be configured to display a digital asset included in the NFT on the display through the web browser.

According to an embodiment, the network interface may be a wireless network interface, and may not include an external connection port for wired external connection to the outside.

According to an embodiment, the controller may be configured to, when the application is executed on the executed OS, perform hash-based integrity verification on the executed application.

According to an embodiment, the storage may store a profiling result of a normal operation related to the application stored in the portable electronic device for cryptocurrency transactions.

According to an embodiment, the controller may be configured to determine whether the application is damaged by comparing a hash of a code of the application which is executed, and when determining that the application is damaged, block the execution of the application.

According to an embodiment, when the application is executed on the OS, the controller may be configured to allocate a virtual space before the execution of the application, and execute the application in the allocated virtual space.

According to an embodiment, the controller may be configured to receive details of a transaction using a cryptocurrency transaction service from an external server, generate a signature with a private key for cryptocurrency transactions, stored in the storage, and transmit the signature to the external server.

Other aspects, advantages, and salient features of the disclosure will become apparent to those skilled in the art from the following detailed description, which, taken in conjunction with the annexed drawings, discloses exemplary embodiments of the disclosure.

### BRIEF DESCRIPTION OF THE DRAWINGS

The above and other aspects, features and advantages of certain exemplary embodiments of the disclosure will be more apparent from the following description taken in conjunction with the accompanying drawings, in which:
FIG. 1 is a diagram illustrating an exemplary portable electronic device for cryptocurrency transactions according to an embodiment of the disclosure;
FIG. 2 is a diagram illustrating an example of using a cryptocurrency transaction service through a portable electronic device for cryptocurrency transactions according to an embodiment of the disclosure;
FIG. 3 is a diagram illustrating an example of performing update for a portable electronic device for cryptocurrency transactions according to an embodiment of the disclosure;
FIG. 4 is a block diagram illustrating the configuration of a portable electronic device for cryptocurrency transactions according to an embodiment of the disclosure; and
FIG. 5 is a flowchart illustrating an operation of a portable electronic device for cryptocurrency transactions according to an embodiment of the disclosure.

Throughout the drawings, like reference numerals will be understood to refer to like parts, components, and structures.

### DETAILED DESCRIPTION

Advantages and features of the disclosure and methods of achieving them will become apparent with reference to the embodiments described below in detail in conjunction with the accompanying drawings. However, the disclosure may be implemented in various different forms, not limited to the embodiments disclosed below. These embodiments only make the disclosure complete, and are provided to fully inform those skilled in the art of the scope of the disclosure, and the disclosure is only defined by the scope of the claims.

The shapes, sizes, proportions, angles, numbers, and so on illustrated in the drawings for describing the embodiments of the disclosure are exemplary, and thus the disclosure is not limited to the illustrations. Like reference numerals denote the same elements throughout the specification. In addition, lest it should obscure the subject matter of the disclosure, a detailed description of a related known technology will be omitted. When the terms "include", "have", "comprise", and so on are used in the specification, they mean that other elements may be added unless "only" is used. A singular form may include plural referents, unless specifically stated otherwise.

When a component is interpreted, it is interpreted as including an error range, even if there is no explicit description of the error range.

In a description of a temporal relationship, when the temporal precedence is described by "after", "following", "after", "before", and so on, it may cover non-continuity unless "immediately" or "directly" is used.

Although first, second, and so on are used to describe various components, these components are not limited by these terms. These terms are only used to distinguish one component from another. Accordingly, a first component mentioned below may be a second component within the spirit of the disclosure.

In describing components of the disclosure, terms such as first, second, A, B, (a), (b), and so on may be used. These terms are only for distinguishing one component form another, and the nature, order, order, or number of components is not limited by the terms. When it is described that a component is "connected to", "coupled with" or "coupled to" another component, the component may be connected directly to the other component. However, unless specifically stated otherwise, it should be understood that the component may be connected to the other component indirectly or with a third component "interposed" therebetween.

"At least one" should be understood as including all possible combinations of one or more of associated components. For example, the meaning of "at least one of a first component, a second component, or a third component" includes not only the first, second, or third component, but also all combinations of two or more of the first, second, and third components.

The features of various embodiments of the disclosure may be partially or wholly combined with each other, and various technical interactions and drivings are possible. The embodiments may be implemented independently or together in a related relationship.

An embodiment of the disclosure will be described with reference to the accompanying drawings and examples. Components shown in the drawings are not true to scale, for convenience of description, and thus should not be construed as limiting.

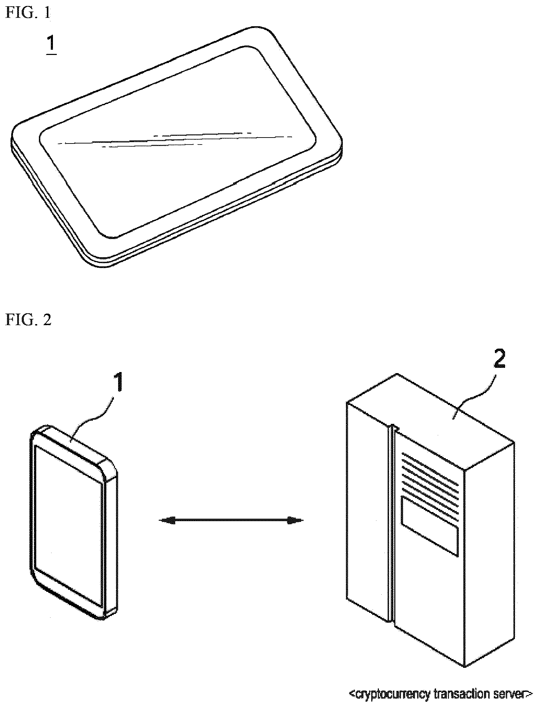

FIG. 1 is a diagram illustrating an exemplary portable electronic device for cryptocurrency transactions according to an embodiment of the disclosure.

Referring to FIG. 1, a portable electronic device 1 for cryptocurrency transactions according to an embodiment of the disclosure may be in the form of, but not limited to, a pad such as a tablet, and have portability like a smartphone. As far as it is available as a cryptocurrency electronic wallet, any electronic device may be used as the portable electronic device 1 for cryptocurrency transactions.

The portable electronic device 1 for cryptocurrency transactions according to the embodiment of the disclosure, which is implemented for cryptocurrency-based financial transactions, may be implemented to use transaction services for decentrazlied finance (DeFi) as well as transaction services for centralized finance (CeFi).

In addition, the portable electronic device 1 for cryptocurrency transactions according to the embodiment of the disclosure is implemented to make non-fungible token (NFT) transactions as well as general cryptocurrency transactions.

In addition, the portable electronic device 1 for cryptocurrency transactions according to the embodiment of the disclosure may be implemented to enable check of digital assets included in an NFT on the portable electronic device 1.

The portable electronic device 1 for cryptocurrency transactions according to the embodiment is provided to a user, with cryptocurrency transaction applications (apps) installed therein, and app installation and update is performed only by an authorized administrator. For example, the cryptocurrency transaction apps may include apps for CeFi and apps for DeFi.

Further, the portable electronic device 1 for cryptocurrency transactions according to the embodiment is implemented such that no app or plug-in other than the cryptocurrency transaction apps is installed.

As such, since the portable electronic device 1 for cryptocurrency transactions according to the embodiment is implemented in the form of a pad, the user may easily and comfortably use a cryptocurrency transaction service.

Further, a program for displaying digital assets included in an NFT (hereinafter, referred to as an "NFT display program") is installed in the portable electronic device 1 for cryptocurrency transactions according to the embodiment, and accordingly, the user may output and identify an image included in the NFT stored in the portable electronic device 1 for currency transactions through the NFT display program. For example, a web browser may be used as the NFT display program.

Accordingly, the user may easily check his/her NFT assets without using a personal computer (PC).

In addition, the portable electronic device 1 for cryptocurrency transactions according to the embodiment is provided with cryptocurrency transaction apps installed, implemented such that no other app or plug-in than the cryptocurrency transaction apps is installed, and allows only an authorized administrator to install and update the apps. Therefore, the portable electronic device 1 for cryptocurrency transactions may have strong security.

The restriction of installation of an app or plug-in in the portable electronic device 1 for cryptocurrency transactions in this manner may prevent installation of an app containing a malicious code in the portable electronic device 1 for cryptocurrency transactions. The resulting prevention of injection of the malicious code into the portable electronic device 1 for cryptocurrency transactions makes it possible to maintain strong security for the portable electronic device 1 for cryptocurrency transactions.

Further, because a necessary app is pre-installed in the portable electronic device 1 for cryptocurrency transactions, while no other apps or plug-ins than the installed apps are allowed to be installed, there is no reason to receive an execution code over a network.

Therefore, the portable electronic device 1 for cryptocurrency transactions may be implemented to block an execution code from a network interface, thereby blocking attacks using the execution code from the network interface and thus maintaining strong security.

According to the embodiment, to provide the user with the user-customized portable electronic device 1 for cryptocurrency transactions, information about a desired service and configuration is received from the user in advance, and the portable electronic device 1 for currency transactions is configured and provided based on the received service and configuration. Accordingly, the user may be provided with the portable electronic device 1 for cryptocurrency transactions, which has a configuration suitable for the user.

Therefore, the portable electronic device 1 for cryptocurrency transactions according to the embodiment may be configured simply and implemented to be intuitively recognized by the user, and the user may use the cryptocurrency transaction service without great difficulty.

Further, the portable electronic device 1 for cryptocurrency transactions according to the embodiment may be implemented to perform hash-based integrity verification for an app.

According to an embodiment, when the portable electronic device 1 for cryptocurrency transactions executes an app, it may determine whether the app has been damaged by comparing a hash for the code of the app with a reference. For this purpose, a profiling result of a normal operation of the app may be stored in the portable electronic device 1 for cryptocurrency transactions.

For example, when determining that the app has been damaged, the portable electronic device 1 for cryptocurrency transactions may block execution of the app. The damage of the app is likely to have been done by a malicious code, and the blocking of execution of the app may lead to pre-blocking of execution of the malicious code, thereby improving security.

Further, the portable electronic device 1 for cryptocurrency transactions according to the embodiment is implemented to perform a virtualization function, and accordingly, each app is independently executed in a virtual space. Therefore, even though the damaged app is executed, the impact of the damaged app may be confined within the virtual space.

Further, app anti-tampering may be applied to the portable electronic device 1 for cryptocurrency transactions according to the embodiment. For example, physical shielding, welding, coating, and/or sensing technology may be applied for anti-tampering. When these anti-tampering techniques are applied to the portable electronic device 1 for cryptocurrency transactions, physical access-based leakage of key data (e.g., a private key) stored in the portable electronic device 1 for cryptocurrency transactions may be prevented, even though the user loses the portable electronic device 1 for cryptocurrency transactions.

According to an embodiment, the portable electronic device 1 for cryptocurrency transactions is implemented to allow the user to use the cryptocurrency transaction service. The user uses the portable electronic device 1 for cryptocurrency transactions to make transactions for digital currencies (cryptocurrencies or NFTs) on blockchains, and an electronic signature is required for the transactions.

This electronic signature is generated based on the private key, and this embodiment proposes a method of preventing leakage of the private key.

FIG. 2 is a diagram illustrating an example of using a cryptocurrency transaction service using a portable electronic device for cryptocurrency transactions according to an embodiment of the disclosure.

Referring to FIG. 2, the portable electronic device for cryptocurrency transaction 1 receives details of a transaction made using the cryptocurrency transaction service to a server (hereinafter, referred to as a cryptocurrency transaction server) 2, generates a signature with a pre-stored private key, and transmit the signature to the external server 2.

Accordingly, since the portable electronic device 1 for cryptocurrency transactions transmits only the signature, not the private key, to the outside, the security of the private key may be improved.

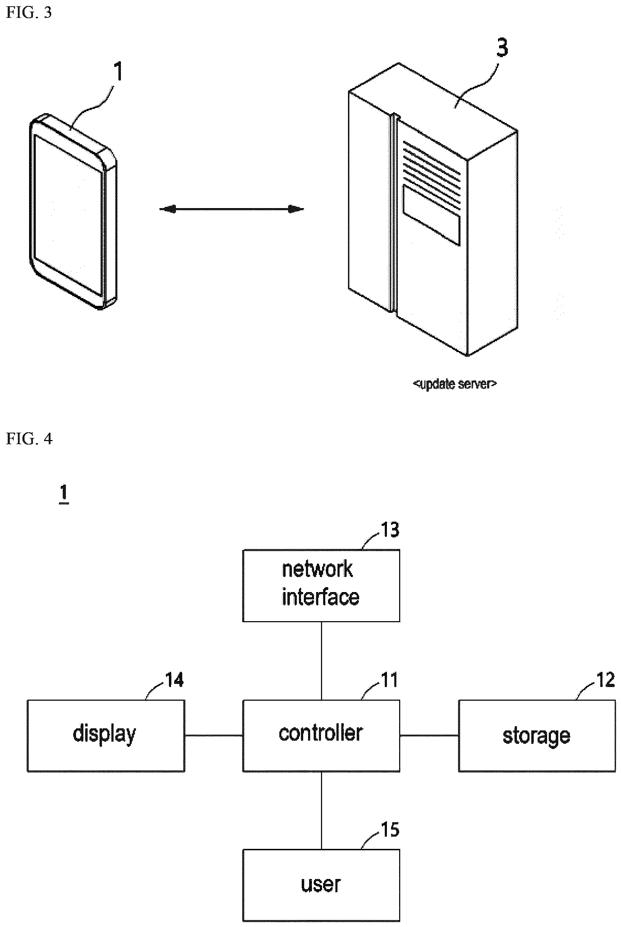

FIG. 3 is a diagram illustrating an example of performing an update for a portable electronic device for cryptocurrency transactions according to an embodiment of the disclosure.

Referring to FIG. 3, when an app installed in the portable electronic device 1 for cryptocurrency transactions is required or additional installation of the App needs to be updated or an additional app needs to be installed in the portable electronic device 1 for cryptocurrency transactions, the user may access a server (hereinafter, an update server) 3 provided by a developer or management company, for update of the portable electronic device 1 for cryptocurrency transactions through the portable electronic device 1 for cryptocurrency transactions, and then update an app of the portable electronic device 1 for cryptocurrency transactions or install an additional app.

Herein, only the update of the app to be updated is not performed, and only the installation of the additional is not performed. Rather, entire software is installed for the portable electronic device 1 for cryptocurrency transactions.

Compared to a conventional electronic device, the security of the portable electronic device 1 for cryptocurrency transactions according to the embodiment of the disclosure will be described as follows.

In the case of the conventional electronic device such as a computer, a smartphone, and a tablet for using the cryptocurrency transaction service, a user is allowed to install a cryptocurrency transaction app. During the installation of the app, malware may be introduced into the electronic device. The malware may steal a private key or cause a fraud transaction.

Since a hardware electronic wallet prevents leakage of a private key to the outside while keeping the private key, the hardware electronic wallet may be used for security. However, when the user uses the cryptocurrency transaction service, the private key may be leaked. Moreover, for the cryptocurrency transaction service, the hardware electronic wallet is connected to a software electronic wallet, and this process causes inconvenience to the user, and has a risk of a fraud transaction when the software electronic wallet or device is damaged.

To reinforce the software electronic wallet, a special platform such as Finney or Samsung Digital Wallet may be provided. Since security technology to protect the software electronic wallet is applied to the platform, the platform provides stronger security than a general electronic device. However, since the user is allowed to install an app, there is still a risk that malware may damage the electronic device.

Unlike the prior art, the portable electronic device 1 for cryptocurrency transactions according to the disclosure is implemented to execute a function of blocking a user from installing or updating an app or plug-in, a function of blocking introduction of an execution code through a network, and a function of verifying integrity of an app, thereby having stronger security than the prior art.

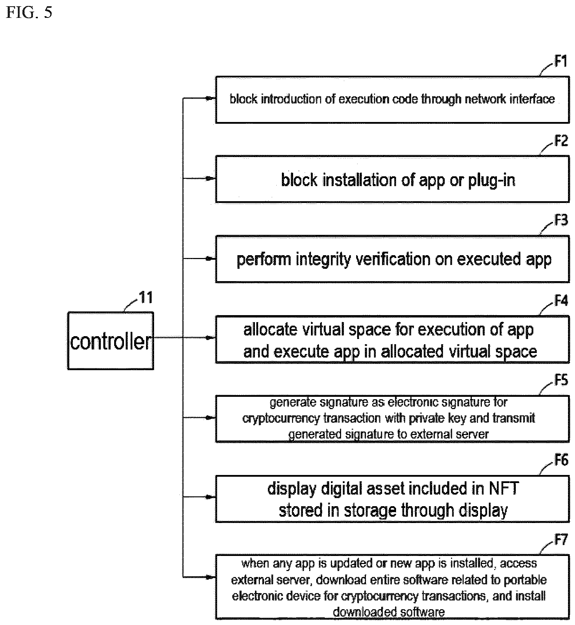

FIG. 4 is a block diagram illustrating the configuration of a portable electronic device for cryptocurrency transactions according to an embodiment of the disclosure, and FIG. 5 is a flowchart illustrating an operation of a portable electronic device for cryptocurrency transactions according to an embodiment of the disclosure.

Referring to FIGS. 2 to 5, the portable electronic device 1 for cryptocurrency transactions according to the embodiment of the disclosure may include a controller 11, a storage 12, a network interface 13, a display 14, and a user interface 15, which should not be construed as limiting.

According to an embodiment, various programs or information for the operations of the portable electronic device 1 for cryptocurrency transactions are stored in the storage 12. For example, an operating system (OS), an electronic wallet, a web browser, apps for cryptocurrency transactions, a wireless network adapter driver, a private key for cryptocurrency transactions, a cryptocurrency, an NFT, and so on may be stored in the storage 12. The private key for cryptocurrency transactions, the cryptocurrency, and the NFT may be stored in the electronic wallet.

According to an embodiment, the network interface 13 is a component that enables the portable electronic device 1 for cryptocurrency transactions to communicate with the outside, for example, the cryptocurrency transaction server 2, for a cryptocurrency transaction service and the update server 3, for updates. The cryptocurrency transaction server 2 is a server that may perform transactions for an NFT as well as a general cryptocurrency.

The network interface 13 according to an embodiment may be a wireless network interface, and does not include an external connection port for communicating with the outside by wire. As such, since the network interface 13 does not include an external connection port for connecting to the outside by wire, the intrusion of a malicious code or an attack to the external connection port may be blocked.

The display 14 may display an operation process, operation result, and so on of the portable electronic device 1 for cryptocurrency transactions in a form that may be checked from the outside.

The user interface 15 is a component that receives an indication (or command) from a user, and may be configured independently of the display 14 or integrated with the display 14 in the form of a touch screen according to an embodiment.

The controller (or processor) 11 provides overall control to the operations of the portable electronic device 1 for cryptocurrency transactions, and in particular, operates based on the OS.

When the portable electronic device 1 for cryptocurrency transactions is booted, the controller 11 may execute the OS stored in the storage 12 and perform an operation according to the executed OS.

Based on the executed OS, the controller 11 may block an execution code from entering through the network interface 13 (F 1).

When an attempt is made to install a new app or plug-in other than cryptocurrency transaction apps stored in the storage 12 in the portable electronic device 1 for cryptocurrency transactions, the controller 11 may block the attempt based on the executed OS (F2).

For example, in the case where the user installs a plug-in to view a video through a web browser, the OS installed in the portable electronic device 1 for cryptocurrency transactions according to the embodiment is programmed to block installation of an app or plug-in other than pre-installed apps or plug-ins, and thus the controller 11 blocks the installation of the plug-in based on the programmed OS.

When an app is executed on the OS, the controller 11 may perform hash-based integrity verification for the executed App as programmed in the OS (F3).

For example, the controller 11 may determine whether the app has been damaged by comparing a hash of the code of the app subjected to integrity verification with a pre-stored reference. For example, when determining that the app has been damaged, the controller 11 may block the execution of the app. To this end, a profiling result of a normal operation of the app may be stored in the storage 12, and used as the reference.

When the app is executed, the controller 11 may allocate a virtual space prior to the execution of the app and execute the app in the allocated virtual space as programmed in the OS (F4).

According to an embodiment, while the cryptocurrency transaction app is running, the controller 11 receives details of a transaction using the cryptocurrency transaction service from the transaction server 2 for cryptocurrency transactions, generate a signature using a private key stored in the storage 12, and transmit the signature to an external server (F5).

According to an embodiment, while a web browser for displaying digital assets (e.g., an image) included in an NFT is running, the controller 11 may display (or output) digital assets included in an NFT stored in the storage 12 on the display 14 through the web browser (F6).

According to an embodiment, when an app installed in the portable electronic device 1 for cryptocurrency transactions needs to be updated or an additional app needs to be installed in the portable electronic device 1 for cryptocurrency transactions, the controller 11 may access the update server 3 provided by the development or management company, download entire software from the update server 3, and install the software in the portable electronic device 1 for cryptocurrency transactions (F7).

As is apparent from the foregoing description, according to an embodiment of the disclosure, since a cryptocurrency electronic wallet is stored in an electronic device that provides a PC environment and has portability, and a program for displaying a digital asset included in an NFT is installed in the portable electronic device for cryptocurrency transactions, a user may easily check the digital asset, NFT without using a PC.

Further, according to an embodiment, the portable electronic device for cryptocurrency transactions is provided with a cryptocurrency transaction app already installed, and is implemented such that installation of no other app or plug-in is allowed, thereby improving security.

Further, the portable electronic device for cryptocurrency transactions according to the embodiment may improve security by blocking access from anyone else except for an authorized administrator regardless of an access purpose such as app installation or app update.

Further, since the portable electronic device for cryptocurrency transactions according to the embodiment receives a request for a desired service and configuration from a user in advance, is configured based on the requested service and configuration, and is provided to the user, the user may be provided with and use the portable electronic device for cryptocurrency transactions having a suitable configuration.

Further, since the portable electronic device for cryptocurrency transactions according to the embodiment is implemented to block an execution code such as a plug-in coming through a network interface, it may block attacks using the execution code from the network interface, and maintain strong security.

Further, since an app anti-tampering technology is applied to the portable electronic device for cryptocurrency transactions according to the embodiment, physical access-based retrieval of main data (e.g., a private key) stored in the portable electronic device for cryptocurrency transactions may be prevented, which leads to prevention of leakage of the main data to the outside.

Further, the portable electronic device for cryptocurrency transactions according to the embodiment may block execution of a malicious code included in the app by performing hash-based integrity verification on the app and blocking the execution of the damaged app, thereby improving security.

Further, since the portable electronic device for cryptocurrency transactions according to the embodiment is implemented to perform a virtualization function, each app is executed independently in a virtual space. Accordingly, even though a damaged app is executed, the impact of the damaged app may be confined within the virtual space.

Further, according to an embodiment, the portable electronic device for cryptocurrency transactions does not directly use the private key in a signature for a digital asset transaction made on a block chain. Therefore, the security of the private key may be improved.

Further, although an NFT may be conventionally checked only in a PC, not a portable electronic device such as a tablet or a mobile phone, the use of the portable electronic device for cryptocurrency transactions may facilitate an NFT check.

While the disclosure has been shown and described with reference to certain exemplary embodiments thereof, it will be understood by those skilled in the art that various changes in form and details may be made therein without departing from the scope of the invention as defined by the appended claims and their equivalents.

## Claims

1. A portable electronic device for cryptocurrency transactions, comprising:
a storage storing an electronic wallet in which at least one of a private key for cryptocurrency transactions or a non-fungible token (NFT) is stored, an operating system (OS), a web browser, and a cryptocurrency transaction application;
a network interface for communication with the outside;
a display; and
a controller,
wherein the controller is configured to operate as programed in the OS, block introduction of an execution code from the network interface, and block installation of a new application or plug-in other than the cryptocurrency transaction application stored in the storage.

2. The portable electronic device according to claim 1, wherein when the electronic wallet includes the NFT, the controller is configured to display a digital asset included in the NFT on the display through the web browser.

3. The portable electronic device according to claim 1 or 2, wherein the network interface is a wireless network interface and does not include an external connection port for wired external connection to the outside.

4. The portable electronic device according to any one of claims 1 to 3, wherein the controller is configured to, when the application is executed on the executed OS, perform hash-based integrity verification on the executed application.

5. The portable electronic device according to claim 4, wherein the storage stores a profiling result of a normal operation related to the application stored in the portable electronic device for cryptocurrency transactions, and
wherein the controller is configured to determine whether the application is damaged by comparing a hash of a code of the application which is executed, and when determining that the application is damaged, block the execution of the application.

6. The portable electronic device according to any one of claims 1 to 5, wherein when the application is executed on the OS, the controller is configured to allocate a virtual space before the execution of the application, and execute the application in the allocated virtual space.

7. The portable electronic device according to any one of claims 1 to 6, wherein the controller is configured to receive details of a transaction using a cryptocurrency transaction service from an external server, generate a signature with a private key for cryptocurrency transactions, stored in the storage, and transmit the signature to the external server.
